# EUROPEAN PATENT APPLICATION

(11) **EP 2 196 350 A1**
(43) Date of publication of application: **16.06.2010**
(21) Application number: 08831093.3
(22) Date of filing: 02.09.2008
(51) Int. Cl.: B60L 3/00, B60K 6/445, B60K 6/448, B60L 11/14, B60W 10/08, B60W 10/26, B60W 20/00, H02J 7/00

(54) **VEHICLE CONTROL DEVICE AND CONTROL METHOD**

(30) Priority: 10.09.2007 JP 2007234414
(71) Applicant: Toyota Jidosha Kabushiki Kaisha, Toyota-shi, Aichi 471-8571 (JP)
(72) Inventor: MITSUTANI, Noritake, Toyota-shi Aichi 471-8571 (JP)
(74) Representative: Kuhnen & Wacker
(86) International application number: PCT/JP2008/065757
(87) International publication number: WO 2009/034882

(57) **Abstract**

A plug-in hybrid vehicle has a battery, a DC/DC converter, an auxiliary battery, an auxiliary device, and an ECU. Provided between the battery and the DC/DC converter is an SMR, which serves as a relay to switch between a state in which the battery and each of the DC/DC converter, the auxiliary battery, the auxiliary device, and the ECU are connected to each other and a state in which they are disconnected from each other. When suspending charging of the battery (S110), the ECU executes a program including a step (S104) of maintaining the SMR in the closed state.

## Description

### TECHNICAL FIELD

The present invention relates to a control apparatus and a control method for a vehicle, in particular, a technique for controlling electric connection between a battery mounted on the vehicle and charged by electric power supplied from a power source external to the vehicle and a device mounted on the vehicle.

### BACKGROUND ART

Conventionally, vehicles employing electric motors for their driving sources are known, such as hybrid vehicles, electric vehicles, and fuel cell vehicles. Each of such vehicles is provided with a power storage device such as a battery storing electric power to be supplied to the electric motor. The battery stores electric power generated upon regenerative braking, or electric power generated by a power generator mounted on the vehicle.

Meanwhile, in some vehicles, batteries mounted thereon are supplied and charged with electric power from power sources external to the vehicles, such as power sources of houses. By connecting an outlet provided in a house to a connector (inlet) provided in such a vehicle via a cable, electric power is supplied from the power source of the house to the battery of the vehicle. In the description below, a vehicle with a battery charged by a power source provided external to the vehicle is also referred to as "plug-in vehicle".

A standard of plug-in vehicles is established by "Electric Vehicle Conductive Charging System General Requirements" (non-patent document 1) in Japan, whereas it is established by "SAE Electric Vehicle Conductive Charge Coupler" (non-patent document 2) in the United States.

As one example, each of "Electric Vehicle Conductive Charging System General Requirements" and "SAE Electric Vehicle Conductive Charge Coupler" establishes a standard regarding a control pilot. A control pilot has a function of notifying a vehicle that an EVSE (Electric Vehicle Supply Equipment) is in a condition to supply energy (electric power), by sending a square wave signal (hereinafter, also referred to as "pilot signal") from an oscillator to a control pilot wire. An EVSE is equipment for coupling an external power source and a vehicle to each other. For example, when the plug of the EVSE is connected to the power source external to the vehicle and the connector of the EVSE is connected to a connector provided in the vehicle, a pilot signal is output. By means of a pulse width of the pilot signal, the plug-in vehicle is notified of a capacity of current that can be supplied. When detecting the pilot signal, the plug-in vehicle makes preparations to start charging (closes a relay and the like).

Further, Japanese Patent Laying-Open No. 8-126121 (patent document 1) discloses an electric vehicle in which a switch (relay) between a battery and a power source is closed after inserting a charging plug into an outlet of a power source.
Patent Document 1: Japanese Patent Laying-Open No. 8-126121
Non-Patent Document 1: "Electric Vehicle Conductive Charging System General Requirements", Japan Electric Vehicle Association Standards (Japan Electric Vehicle Standards), March 29, 2001
Non-Patent Document 2: "SAE Electric Vehicle Conductive Charge Coupler", (the United States), SAE Standards, SAE International, November, 2001

### DISCLOSURE OF THE INVENTION

### PROBLEMS TO BE SOLVED BY THE INVENTION

While charging a battery, for example, the plug of a device (such as an EVSE) for coupling an external power source and a vehicle to each other may be detached from an outlet provided in a house, the EVSE may be detached from the vehicle, or power failure may occur. In these cases, the power source external to the plug-in vehicle and the plug-in vehicle are disconnected from each other. Accordingly, the battery cannot be charged. Thus, the charging of the battery needs to be suspended.

However, even while suspending the charging, a device mounted on the vehicle may need to be operated. For example, the system of the plug-in vehicle needs to be maintained at an active state in order to resume the charging when the external power source and the plug-in vehicle are connected again.

However, at the moment of filing of the present application, neither "Electric Vehicle Conductive Charging System General Requirements" nor "SAE Electric Vehicle Conductive Charge Coupler" has established a specific standard as to what control is performed while suspending charging of a battery. Also, Japanese Patent Laying-Open No. 8-126121 does not describe what control is performed while suspending the charging of the battery.

An object of the present invention is to provide a control apparatus and a control method for a vehicle, by each of which a device therein can be operated while suspending charging.

### MEANS FOR SOLVING THE PROBLEMS

A control apparatus for a vehicle according to a certain aspect is a control apparatus for a vehicle having a battery charged by electric power supplied from a power source external to the vehicle via an EVSE that transfers electric power when the vehicle and the power source are coupled by the EVSE, and a device that receives electric power supplied from the battery. The control apparatus includes: a relay that switches a state in which the battery and the device are connected to each other and a state in which the battery and the device are disconnected from each other; and a control unit. The control unit controls the relay to connect the battery and the device to each other during charging of the battery, suspends the charging of the battery, and controls the relay to maintain the battery and the device to be connected to each other, if the charging of the battery is suspended.

According to this configuration, the vehicle has the battery charged by electric power supplied from the power source via the EVSE that transfers electric power when the vehicle and the power source external to the vehicle are coupled by the EVSE, and the device that receives electric power supplied from the battery. The relay switches between the state in which the battery and the device are connected to each other and the state in which they are disconnected from each other. The relay is controlled to connect the battery and the device to each other upon charging the battery. When the charging of the battery is suspended, the relay is controlled to maintain the battery and the device to be connected to each other. In this way, electric power can be maintained to be supplied to the device. Hence, even while the charging is being suspended, the device can be operated.

Preferably, the control unit controls the relay to maintain the battery and the device to be connected to each other until a predetermined time passes after the charging of the battery is suspended.

According to this configuration, until the predetermined time passes after the charging of the battery is suspended, the battery and the device are maintained to be connected to each other. In this way, the time during which electric power can be discharged from the battery can be limited. Hence, an amount of discharge from the battery can be prevented from being too large.

More preferably, a plurality of the batteries are provided to be connected to each other in parallel. The relay is provided for each of the batteries. The control unit controls a relay provided for a certain battery of the plurality of the batteries, to maintain the certain battery and the device to be connected to each other, and controls a relay provided for a remaining battery of the plurality of the batteries to disconnect the remaining battery and the device from each other.

According to this configuration, the batteries are provided to be connected to each other in parallel. The relay is provided for each of the batteries. When the charging is suspended, the certain battery of the plurality of batteries and the device are maintained to be connected to each other. The remaining battery of the plurality of batteries and the device are disconnected from each other. In this way, loss in electric power can be reduced in the battery disconnected from the device.

More preferably, the EVSE outputs a pilot signal when connected to the vehicle and the power source. The control unit suspends the charging of the battery if the pilot signal is stopped during the charging of the battery.

According to this configuration, the EVSE outputs the pilot signal when connected to the vehicle and the power source. When the pilot signal is stopped during the charging of the battery, it can be assumed that the EVSE is detached from the vehicle or the power source. In this case, electric power cannot be supplied from the power source to the vehicle. Hence, the charging of the battery is suspended. In this way, the charging can be suspended immediately when electric power cannot be supplied from the power source to the vehicle.

More preferably, the control unit detects a connector signal when the EVSE is connected to the vehicle, and the control unit suspends the charging of the battery if the connector signal is stopped during the charging of the battery.

According to this configuration, when the EVSE is connected to the vehicle, the connector signal is detected. When the connector signal is stopped during the charging of the battery, it can be assumed that the EVSE is detached from the vehicle. In this case, electric power cannot be supplied from the power source to the vehicle. Hence, the charging of the battery can be suspended. In this way, when electric power cannot be supplied from the power source to the vehicle, the charging can be suspended immediately.

More preferably, the control apparatus further includes a sensor that detects a voltage of the power source within the vehicle. The control unit suspends the charging of the battery if the voltage of the power source becomes smaller than a threshold value during the charging of the battery.

According to this configuration, the voltage of the power source is detected within the vehicle. When the voltage of the power source becomes smaller than the threshold value during the charging of the battery, it can be assumed that electric power is not being supplied from the power source to the vehicle. Hence, the charging of the battery is suspended. In this way, the charging can be suspended immediately when electric power cannot be supplied from the power source to the vehicle.

More preferably, the vehicle has a charger mounted thereon to control electric power charged to the battery.

According to this configuration, the charger mounted on the vehicle can be used to charge the battery.

### EFFECTS OF THE INVENTION

According to the present invention, upon charging the battery, the relay is controlled to connect the battery and the device to each other. When suspending the charging of the battery, the relay is controlled to maintain the battery and the device to be connected to each other. In this way, electric power can be maintained to be supplied to the device. Accordingly, the device can be operated while the charging is being suspended.

### BRIEF DESCRIPTION OF THE DRAWINGS

Fig. 1 is a schematic diagram showing a plug-in hybrid vehicle in a first embodiment.
Fig. 2 shows a nomographic chart of a power split device.
Fig. 3 is a first diagram showing an electrical system of the plug-in hybrid vehicle in the first embodiment.
Fig. 4 is a second diagram showing the electrical system of the plug-in hybrid vehicle in the first embodiment.
Fig. 5 is a third diagram showing the electrical system of the plug-in hybrid vehicle in the first embodiment.
Fig. 6 is a function block diagram of an ECU in the first embodiment.
Fig. 7 is a flowchart showing a control structure of a program executed by the ECU in the first embodiment.
Fig. 8 is a fourth diagram showing the electrical system of the plug-in hybrid vehicle in the first embodiment.
Fig. 9 is a first diagram showing an electrical system of a plug-in hybrid vehicle in a second embodiment.
Fig. 10 is a function block diagram of the ECU in the second embodiment.
Fig. 11 is a flowchart showing a control structure of a program executed by the ECU in the second embodiment.
Fig. 12 is a second diagram showing the electrical system of the plug-in hybrid vehicle in the second embodiment.
Fig. 13 is a first diagram showing an electrical system of a plug-in hybrid vehicle in a third embodiment.
Fig. 14 is a second diagram showing the electrical system of the plug-in hybrid vehicle in the third embodiment.

### DESCRIPTION OF THE REFERENCE SIGNS

100: engine; 110: first MG; 120: second MG; 130: power split device; 140: speed reducer; 150: battery; 160: front wheel; 170: ECU; 172: voltmeter; 200: converter; 210: first inverter; 220: second inverter; 230: DC/DC converter; 240: auxiliary battery; 242: auxiliary device; 250: SMR; 260: DFR; 270: connector; 280: LC filter; 290: charger; 292: AC/DC converting circuit; 294: DC/AC converting circuit; 296: isolation transformer; 298: rectifying circuit; 300: charging cable; 310: connector; 312: switch; 320: plug; 330: CCID; 332: relay; 334: control pilot circuit; 400: outlet; 402: power source; 701: first control unit; 702: second control unit; 703: third control unit; 710: pilot signal detecting unit; 712: connector signal detecting unit; 714: voltage detecting unit; 716: suspending unit; 800: add-on battery; 802: add-on SMR; 804: add-on converter.

### BEST MODES FOR CARRYING OUT THE INVENTION

Referring to figures, embodiments of the present invention will be described below. In the description below, the same components are given the same reference characters. Their names and functions are also the same. Hence, they will not be described in detail repeatedly.

### First Embodiment

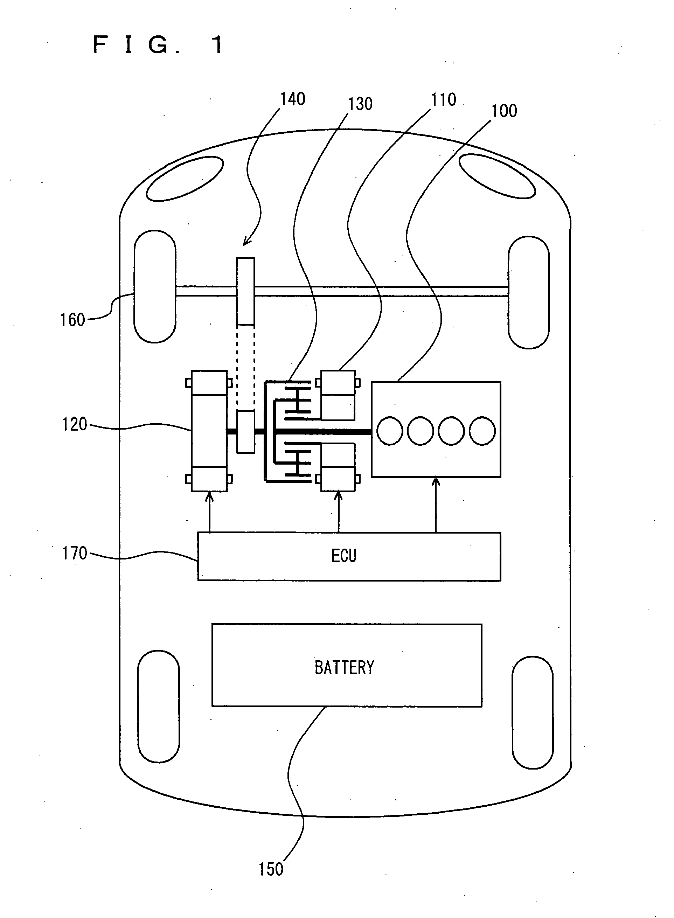

Referring to Fig. 1, a plug-in hybrid vehicle having a control apparatus according to a first embodiment of the present invention will be described. The vehicle includes an engine 100, a first MG (Motor Generator) 110, a second MG 120, a power split device 130, a speed reducer 140, and a battery 150.

The vehicle travels using driving power provided from at least one of engine 100 and second MG 120. Instead of the plug-in hybrid vehicle, an electric vehicle or a fuel cell vehicle traveling using only driving power supplied from a motor may be employed.

Engine 100, first MG 110, and second MG 120 are connected to one another via power split device 130. Motive power generated by engine 100 is split by power split device 130 for two paths. One of them is a path for driving front wheels 160 via speed reducer 140. The other is a path for driving first MG 110 to generate electric power.

First MG 110 is a three-phase alternating current rotating machine including a U-phase coil, a V-phase coil, and a W-phase coil. First MG 110 generates electric power using the motive power generated by engine 100 and split by power split device 130. The electric power generated by first MG 110 is used depending on a traveling state of the vehicle and a state of SOC (State Of Charge) of battery 150. For example, during normal traveling, the electric power generated by first MG 110 is used directly as electric power for driving second MG 120. On the other hand, when the SOC of battery 150 is lower than a predetermined value, the electric power generated by first MG 110 is converted by a below-described inverter from alternating-current power to direct-current power. Thereafter, a below-described converter adjusts a voltage thereof and the electric power is stored in battery 150.

When first MG 110 serves as a power generator, first MG 110 generates a negative torque. The negative torque used herein refers to a torque serving as a load for engine 100. When first MG 110 is supplied with electric power to operate as a motor, first MG 110 generates a positive torque. The positive torque used herein refers to a torque not serving as a load for engine 100, i.e., a torque assisting rotation of engine 100. The same holds true for second MG 120.

Second MG 120 is a three-phase alternating current rotating machine including a U-phase coil, a V-phase coil, and a W-phase coil. Second MG 120 is driven using at least one of the electric power stored in battery 150 and the electric power generated by first MG 110.

The driving power generated by second MG 120 is transmitted to front wheels 160 via speed reducer 140. In this way, second MG 120 assists engine 100, and the vehicle travels using the driving power provided from second MG 120. Instead of or in addition to front wheels 160, rear wheels may be driven.

Upon regenerative braking of the plug-in hybrid vehicle, front wheels 160 drive second MG 120 through speed reducer 140 and second MG 120 serves as a power generator. In this way, second MG 120 operates as a regenerative brake to convert the braking energy to electric power. The electric power thus generated by second MG 120 is stored in battery 150.

Power split device 130 is constituted by a planetary gear including a sun gear, a pinion gear, a carrier, and a ring gear. The pinion gear engages with the sun gear and the ring gear. The carrier rotatably supports the pinion gear. The sun gear is coupled to the rotation shaft of first MG 110. The carrier is coupled to the crankshaft of engine 100. The ring gear is coupled to the rotation shaft of second MG 120 and speed reducer 140.

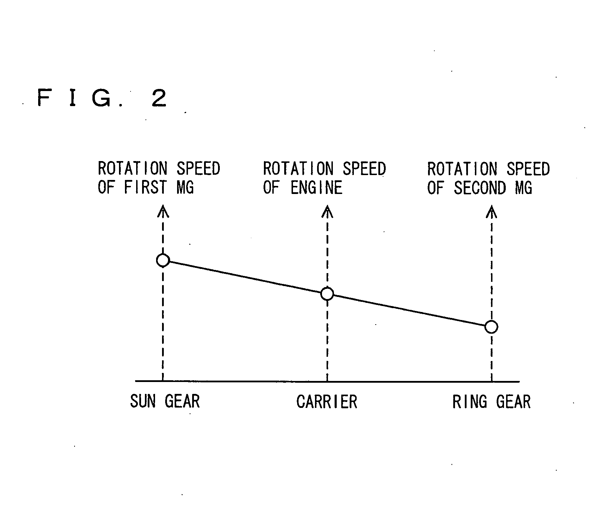

Since engine 100, first MG 110, and second MG 120 are coupled to one another through power split device 130 constituted by the planetary gear, the rotation speeds of engine 100, first MG 110, and second MG 120 are in such a relation that they are connected by a straight line in a nomographic chart as shown in Fig. 2.

Referring to Fig. 1 again, battery 150 is a battery pack constituted by a plurality of battery modules connected in series and each having a plurality of battery cells incorporated therein. Battery 150 has a voltage of, for example, approximately 200 V. Battery 150 is charged by electric powers supplied from first MG 110 and second MG 120 as well as electric power supplied from a power source external to the vehicle.

Engine 100, first MG 110, and second MG 120 are controlled by an ECU (Electronic Control Unit) 170. ECU 170 may be divided into a plurality of ECUs.

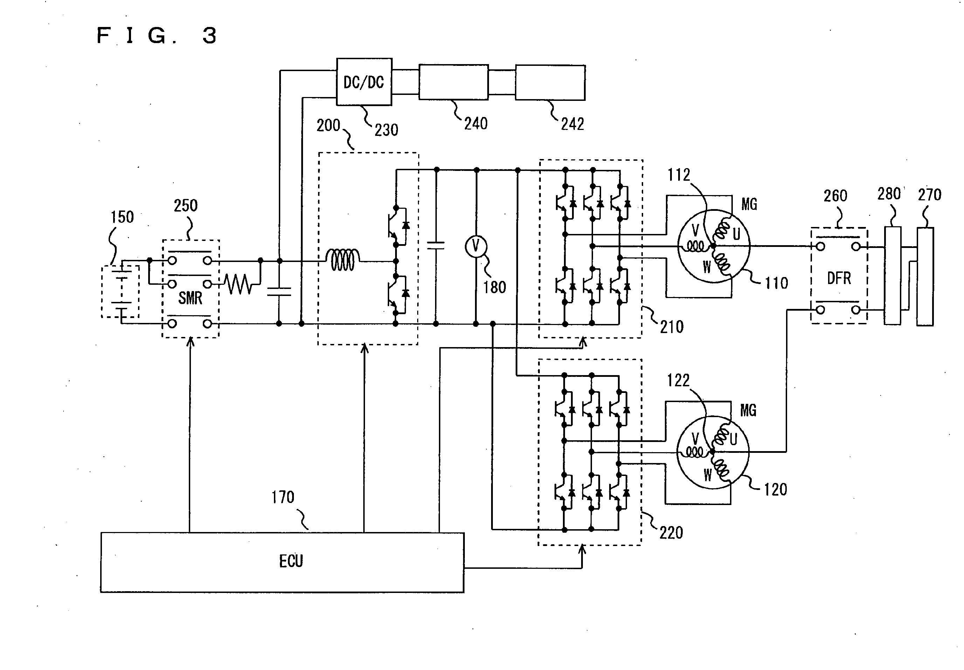

Referring to Fig. 3, an electrical system of the plug-in hybrid vehicle will be further described. The plug-in hybrid vehicle is provided with a converter 200, a first inverter 210, a second inverter 220, a DC/DC converter 230, an auxiliary battery 240, an SMR (System Main Relay) 250, a DFR (Dead Front Relay) 260, a connector (inlet) 270, and an LC filter 280.

Converter 200 includes a reactor, two npn type transistors, and two diodes. The reactor has one end connected to the positive electrode side of battery 150, and has the other end connected to the connection point of the two npn type transistors.

The two npn type transistors are connected in series. The npn type transistors are controlled by ECU 170. Between the collector and the emitter of each npn type transistor, each diode is connected to allow a current to flow from the emitter side to the collector side.

As the npn type transistor, for example, an IGBT (Insulated Gate Bipolar Transistor) can be used. Instead of the npn type transistor, a power switching element such as a power MOSFET (Metal Oxide Semiconductor Field-Effect Transistor) can be used.

When supplying first MG 110 or second MG 120 with electric power discharged from battery 150, converter 200 boosts the voltage thereof. In contrast, when charging battery 150 with electric power generated by first MG 110 or second MG 120, converter 200 steps down the voltage thereof.

A voltmeter 180 detects a system voltage VH among converter 200, first inverter 210, and second inverter 220. A result of detection by voltmeter 180 is sent to ECU 170.

First inverter 210 includes a U-phase arm, a V-phase arm, and a W-phase arm. The U-phase arm, the V-phase arm, and the W-phase arm are connected in parallel. Each of the U-phase arm, the V-phase arm, and the W-phase arm has two npn type transistors connected in series. Between the collector and the emitter of each npn type transistor, each diode is connected to allow a current to flow from the emitter side to the collector side. The connection points of the npn type transistors of each arm are respectively connected to ends different from a neutral point 112 in each coil of first MG 110.

First inverter 210 converts a direct current supplied from battery 150 into an alternating current, and supplies it to first MG 110. Also, first inverter 210 converts an alternating current generated by first MG 110 into a direct current.

Second inverter 220 includes a U-phase arm, a V-phase arm, and a W-phase arm. The U-phase arm, the V-phase arm, and the W-phase arm are connected in parallel. Each of the U-phase arm, the V-phase arm, and the W-phase arm has two npn type transistors connected in series. Between the collector and the emitter of each npn type transistor, a diode is connected to allow a current to flow from the emitter side to the collector side. The connection points of the npn type transistors of each arm are respectively connected to ends different from a neutral point 122 in each coil of second MG 120.

Second inverter 220 converts a direct current supplied from battery 150 into an alternating current, and supplies it to second MG 120. Also, second inverter 220 converts an alternating current generated by second MG 120 into a direct current.

In each of the inverters, a set of the U-phase coil and the U-phase arm, a set of the V-phase coil and the V-phase arm, and a set of the W-phase coil and the W-phase arm each have a configuration similar to that of converter 200. Hence, first inverter 210 and second inverter 220 are capable of boosting a voltage. In the present embodiment, when charging battery 150 with electric power supplied from the power source external to the vehicle, first inverter 210 and second inverter 220 boost a voltage. For example, a voltage of 100 V is boosted to a voltage of approximately 200 V.

DC/DC converter 230 is connected between battery 150 and converter 200 in parallel with converter 200. DC/DC converter 230 steps down a direct-current voltage. DC/DC converter 230 outputs electric power, which is charged to auxiliary battery 240. The electric power thus charged to auxiliary battery 240 is supplied to an auxiliary device 242, such as an electrically driven oil pump, and ECU 170.

SMR (System Main Relay) 250 is provided between battery 150 and DC/DC converter 230. SMR 250 is a relay for switching between a state in which battery 150 and the electrical system are connected to each other and a state in which they are disconnected from each other. When SMR 250 is in the open state, battery 150 is disconnected from the electrical system. When SMR 250 is in the closed state, battery 150 is connected to the electrical system.

Namely, when SMR 250 is in the open state, battery 150 is electrically disconnected from DC/DC converter 230, auxiliary battery 240, auxiliary device 242, ECU 170, and the like. When SMR 250 is in the closed state, electric power can be supplied from battery 150 to DC/DC converter 230, auxiliary battery 240, auxiliary device 242, ECU 170, and the like.

The state of SMR 250 is controlled by ECU 170. For example, when ECU 170 becomes active, SMR 250 is closed. When ECU 170 becomes inactive, SMR 250 is opened.

DFR (Dead Front Relay) 260 is connected to neutral point 112 of first MG 110 and neutral point 122 of second MG 120. DFR 260 is a relay for switching between a state in which the electrical system of the plug-in hybrid vehicle and the external power source are connected to each other and a state in which they are disconnected from each other. When DFR 250 is in the open state, the electrical system of the plug-in hybrid vehicle is disconnected from the external power source. When DFR 250 is in the closed state, the electrical system of the plug-in hybrid vehicle is connected to the external power source.

Connector 270 is provided at, for example, a side portion of the plug-in hybrid vehicle. As described below, to connector 270, a connector of a charging cable for coupling the plug-in hybrid vehicle to the external power source is connected. LC filter 280 is provided between DFR 260 and connector 270.

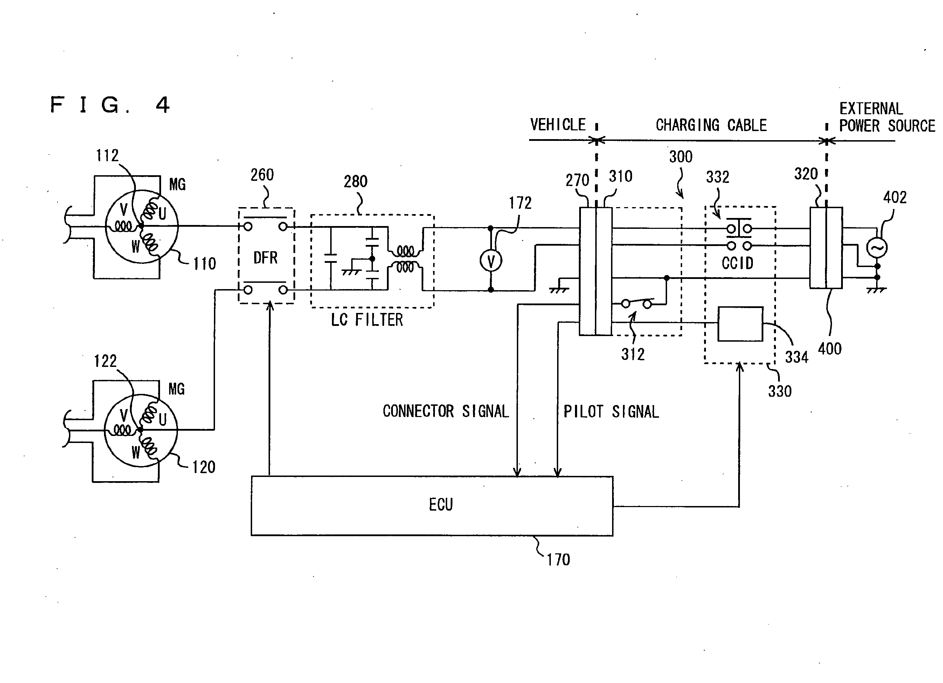

Referring to Fig. 4, charging cable 300 for coupling the plug-in hybrid vehicle to the external power source includes connector 310, a plug 320, and a CCID (Charging Circuit Interrupt Device) 330. Charging cable 300 corresponds to an EVSE.

Connector 310 of charging cable 300 is connected to connector 270 provided in the plug-in hybrid vehicle. Connector 310 is provided with a switch 312. When connector 310 of charging cable 300 is connected to connector 270 provided in the plug-in hybrid vehicle and switch 312 is closed, ECU 170 receives a connector signal CNCT indicating that connector 310 of charging cable 300 is connected to connector 270 provided in the plug-in hybrid vehicle.

Switch 312 is opened and closed in conjunction with a locking fitting (not shown) for locking connector 310 of charging cable 300 onto connector 270 of the plug-in hybrid vehicle. The locking fitting (not shown) swings when an operator presses a button (not shown) provided in connector 310.

For example, when connector 310 of charging cable 300 is connected to connector 270 provided in the plug-in hybrid vehicle and the operator takes a finger off the button, the locking fitting is engaged with connector 270 provided in the plug-in hybrid vehicle and switch 312 is closed. When the operator presses the button, the locking fitting and connector 270 are disengaged and switch 312 is opened. It should be noted that a way to open/close switch 312 is not limited to this.

Plug 320 of charging cable 300 is connected to an outlet 400 provided in a house. Outlet 400 is supplied with alternating-current power from power source 402 external to the plug-in hybrid vehicle.

CCID 330 has a relay 332 and a control pilot circuit 334. When relay 332 is in the open state, a path for supplying electric power from power source 402 external to the plug-in hybrid vehicle to the plug-in hybrid vehicle is disconnected. When relay 332 is closed, electric power can be supplied from power source 402 external to the plug-in hybrid vehicle to the plug-in hybrid vehicle. The state of relay 332 is controlled by ECU 170 when connector 310 of charging cable 300 is connected to connector 270 of the plug-in hybrid vehicle.

When plug 320 of charging cable 300 is connected to outlet 400, i.e., is connected to external power source 402 and connector 310 is connected to connector 270 provided in the plug-in hybrid vehicle, control pilot circuit 334 sends a pilot signal (square wave signal) CPLT to a control pilot wire.

The pilot signal is oscillated by an oscillator provided in control pilot circuit 334. Output of the pilot signal is delayed by an amount of delay in an operation of the oscillator or is stopped.

Even when plug 320 of charging cable 300 is connected to outlet 400 but connector 310 is detached from connector 270 provided in the plug-in hybrid vehicle, control pilot circuit 334 can output pilot signal CPLT constantly. However, ECU 170 cannot detect pilot signal CPLT output when connector 310 is detached from connector 270 provided in the plug-in hybrid vehicle.

When plug 320 of charging cable 300 is connected to outlet 400 and connector 310 is connected to connector 270 of the plug-in hybrid vehicle, control pilot circuit 334 oscillates pilot signal CPLT with a predetermined pulse width (duty cycle).

By means of the pulse width of pilot signal CPLT, the plug-in hybrid vehicle is notified of a capacity of current that can be supplied. For example, the plug-in hybrid vehicle is notified of a current capacity of charging cable 300. The pulse width of pilot signal CPLT is constant, not depending on voltage and current of external power source 402.

Meanwhile, when a different type of charging cable is used, the pulse width of pilot signal CPLT can differ. Specifically, the pulse width of pilot signal CPLT can be determined for each type of charging cable.

In the present embodiment, when the plug-in hybrid vehicle and external power source 402 are coupled to each other by charging cable 300, electric power supplied from external power source 402 is charged to battery 150.

Alternating-current voltage VAC of external power source 402 is detected by voltmeter 172 provided within the plug-in hybrid vehicle.

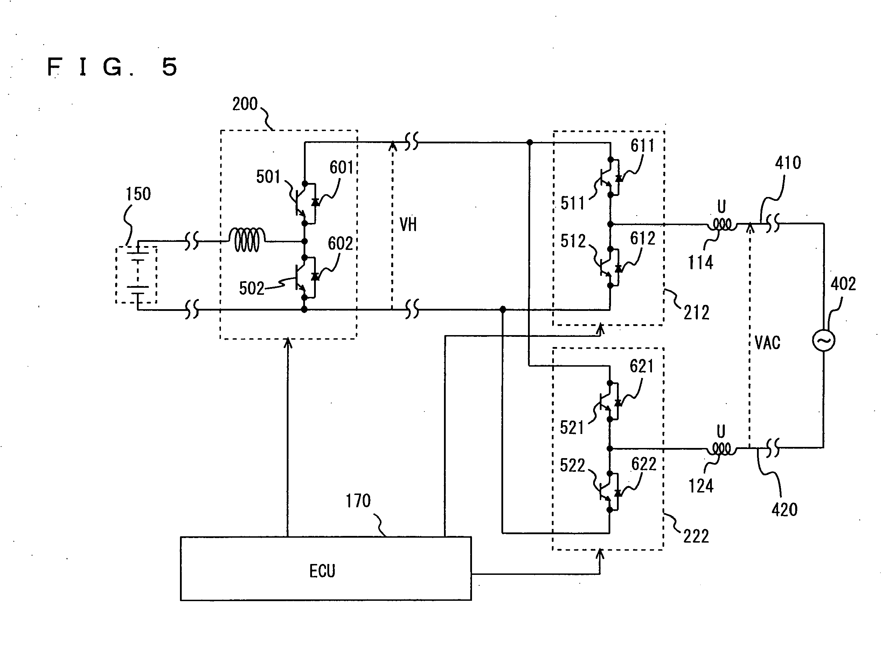

The following describes operations of converter 200, first inverter 210, and second inverter 220 when battery 150 is charged using external power source 402. Fig. 5 shows a portion of circuit diagrams shown in Figs. 3 and 4, which is concerned with charging.

Fig. 5 representatively shows U-phase arms 212, 222 of first inverter 210 and second inverter 220 of Fig. 1. U-phase coils 114, 124 of the coils of first MG 110 and second MG 120 are representatively shown therein. The other two phase circuits operate in a manner similar to the U-phase circuit. Hence, detailed explanation therefor is not repeated here.

As described above, each of the set of U-phase coil 114 of first MG 110 and U-phase arm 212 of first inverter 210, and the set of U-phase coil 124 of second MG 120 and U-phase arm 222 of second inverter 220 has a configuration similar to that of converter 200.

When voltage VAC of external power source 402 > 0, i.e., a line 410 has a voltage VX higher than a voltage VY of a line 420, a transistor 501 of converter 200 is brought into the ON state and a transistor 502 thereof is brought into the OFF state. A transistor 512 of first inverter 210 is switched at a cycle and a duty ratio according to voltage VAC of external power source 402. A transistor 511 thereof is controlled to be in the OFF state or in a switching state in which it becomes conductive in synchronism with conduction of a diode 611. A transistor 521 of second inverter 220 is brought into the OFF state, and a transistor 522 thereof is brought into the ON state.

When transistor 512 of first inverter 210 is in the ON state, a current flows in U-phase coil 114, transistor 512, diode 622, and U-phase coil 124 in this order. Energy stored in U-phase coil 114 and U-phase coil 124 are released when transistor 512 of first inverter 210 is brought into the OFF state. The energy thus released, i.e., electric power, is supplied to battery 150 via diode 611 of first inverter 210 and transistor 501 of converter 200.

To reduce loss by diode 611 of first inverter 210, transistor 511 may be brought to be conductive in synchronism with a conduction period of diode 611. The switching cycle and duty ratio of transistor 512 of first inverter 210 are determined based on values of voltage VAC of the external power source and system voltage (voltage between converter 200 and each inverter) VH.

When voltage VAC of external power source 402 < 0, i.e., when voltage VX of line 410 is smaller than voltage VY of line 420, transistor 501 of converter 200 is brought into the ON state and transistor 502 thereof is brought into the OFF state. In second inverter 220, transistor 522 is switched at a cycle and a duty ratio according to voltage VAC, and transistor 521 is brought into the OFF state or a switching state in which it becomes conductive in synchronism with conduction of diode 621. Transistor 511 of first inverter 210 is brought into the OFF state and transistor 512 is brought into the ON state.

When transistor 522 of second inverter 220 is in the ON state, a current flows in U-phase coil 124, transistor 522, diode 612, and U-phase coil 114 in this order. Energy stored in U-phase coil 114 and U-phase coil 124 is released when transistor 522 of second inverter 220 is brought into the OFF state. The energy thus released, i.e., electric power is supplied to battery 150 via diode 621 of second inverter 220 and transistor 501 of converter 200.

To reduce loss by diode 621 of second inverter 220, transistor 521 may be brought to be conductive in synchronism with a conduction period of diode 621. The switching cycle and duty ratio of transistor 522 are determined based on voltage VAC of the external power source and system voltage VH.

When battery 150 is charged, SMR 250, DFR 260, and relay 332 in CCID 330 are closed.

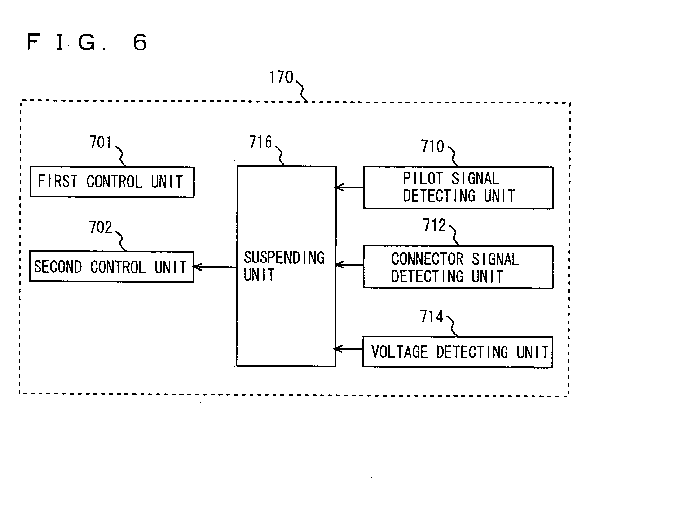

Referring to Fig. 6, functions of ECU 170 will be described. It should be noted that the functions described below may be implemented by software or may be implemented by hardware.

ECU 170 includes a first control unit 701, a second control unit 702, a pilot signal detecting unit 710, a connector signal detecting unit 712, a voltage detecting unit 714, and a suspending unit 716.

When battery 150 is charged using external power source 402, first control unit 701 controls SMR 250 to close. In SMR 250, the contact point connected to the negative electrode side of battery 150 is closed, and thereafter a contact point, connected to a resistor, of the two contact points connected to the positive electrode side of battery 150 is closed. Thereafter, the remaining contact point is closed. After closing the contact point not connected to the resistor, the contact points connected to the resistor may be opened. It should be noted that the operation in closing SMR 250 is not limited to this.

If charging of battery 150 is suspended, second control unit 702 maintains SMR 250 in the closed state until a predetermined standby time passes after the charging is suspended.

Pilot signal detecting unit 710 detects pilot signal CPLT oscillated by pilot circuit 334 of charging cable 300. Connector signal detecting unit 712 detects connector signal CNCT when connector 310 of charging cable 300 is connected to connector 270 provided in the plug-in hybrid vehicle. Voltage detecting unit 714 detects voltage VAC of power source 402 external to the plug-in hybrid vehicle, based on a signal transmitted from voltmeter 172.

Suspending unit 716 suspends charging of battery 150 if at least one of the following conditions is satisfied during the charging: a condition in which connector signal CNCT is OFF (inactive), a condition in which pilot signal CPLT is OFF, and a condition in which voltage VAC of external power source 402 detected using voltmeter 172 is smaller than a threshold value.

While the charging is being suspended, converter 200, first inverter 210, and second inverter 220 become inactive, and DFR 260 and relay 332 in CCID 330 are opened. The suspension of charging is continued until the standby time passes.

For example, when the pilot signal is output (detected) before the standby time passes and the condition in which voltage VAC is equal to or higher than the threshold value is satisfied, the charging of battery 150 is resumed. It should be noted that the condition of suspending the charging of battery 150 and the condition of resuming it are not limited to these.

Passage of time after suspending the charging of battery 150, i.e., passage of time after opening DFR 260 and relay 332 in CCID 330 to disconnect from power source 402, is measured by a counter provided in ECU 170. For the counter for measuring the passage of time, for example, an auto increment counter is used which keeps on measuring passage of time as long as it is reset. A counter other than the auto increment counter may be used.

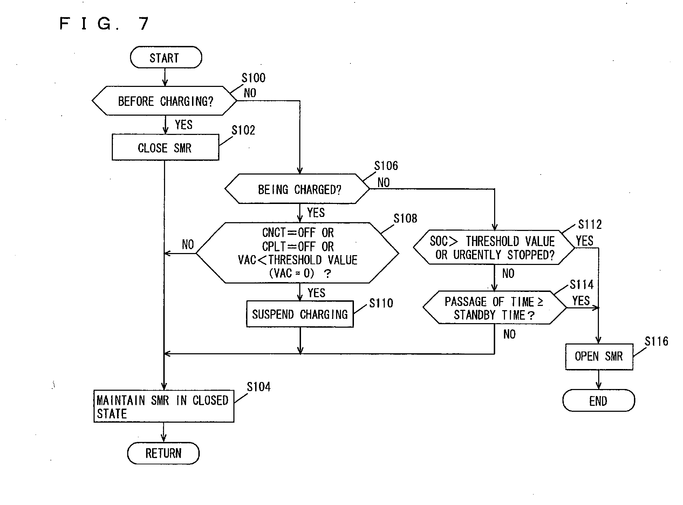

Referring to Fig. 7, a control structure of a program executed by ECU 170 will be described. It should be noted that the program executed by ECU 170 may be stored in a storage medium such as a CD (Compact Disc) or a DVD (Digital Versatile Disc) for distribution in a market. Further, the below-described program is executed, for example, when plug 320 of charging cable 300 is connected to outlet 400, i.e., is connected to external power source 402 and connector 310 is connected to connector 270 provided in the plug-in hybrid vehicle.

In a step (hereinafter, the term "step" is abbreviated as "S") 100, ECU 170 determines whether or not battery 150 starts to be charged using power source 402 external to the plug-in hybrid vehicle. For example, when SMR 250, DFR 260, and relay 332 in CCID 330 are opened, it is determined that battery 150 is before being charged. It should be noted that a way to determine whether or not battery 150 is before being charged is not limited to this. When battery 150 is before being charged (YES in S100), the process goes to an S102. Otherwise (NO in S100), the process goes to an S106.

In S102, ECU 170 closes SMR 250. In an S104, ECU 170 maintains SMR 250 in the closed state. Thereafter, the process goes back to S100.

In S106, ECU 170 determines whether or not battery 150 is being charged using power source 402 external to the plug-in hybrid vehicle. For example, when SMR 250, DFR 260, and relay 332 in CCID 330 are closed, it is determined that battery 150 is being charged. It should be noted that a way to determine whether or not battery 150 is being charged is not limited to this.

When battery 150 is being charged (YES in S106), the process goes to an S108. Otherwise (NO in S106), the process goes to S112.

In S108, ECU 170 determines whether or not connector signal CNCT is OFF, whether or not pilot signal CPLT is OFF, or whether voltage VAC of external power source 402 detected using voltmeter 172 is smaller than the threshold value.

If connector signal CNCT is OFF, if pilot signal CPLT is OFF, or if voltage VAC of external power source 402 detected using voltmeter 172 is smaller than the threshold value (YES in S108), the process goes to an S110. Otherwise (NO in S108), the process goes to S104.

In S110, ECU 170 suspends the charging of battery 150. Thereafter, the process goes to S104. When suspending the charging, DFR 260 and relay 332 in CCID 330 are opened.

In an S112, ECU 170 determines whether battery 150 is fully charged or the charging is urgently stopped. When the SOC of battery 150 is greater than a threshold value, it is determined that battery 150 is in the fully charged state. If a malfunction is detected in the electrical system, the charging is urgently stopped.

When battery 150 is in the fully charged state or if the charging is urgently stopped (YES in S112), the process goes to an S116. Otherwise (NO in S112), the process goes to S114. When battery 150 is fully charged or if the charging is urgently stopped, DFR 260 and relay 332 in CCID 330 are opened.

In an S114, ECU 170 determines whether or not the passage of time after suspending the charging is equal to or longer than the standby time. When the passage of time after suspending the charging is equal to or longer than the standby time (YES in S114), the process goes to an S116. Otherwise (NO in S114), the process goes to S104. In S116, ECU 170 opens SMR 250.

The following describes operations of ECU 170 based on the above-described structure and flowchart.

When battery 150 is before being charged using power source 402 external to the plug-in hybrid vehicle (YES in S100), i.e., when SMR 250, DFR 260, and relay 332 in CCID 330 are opened, SMR 250 is closed (S102).

When the charging has already been started (NO in S100), it is determined whether or not battery 150 is being charged (S106). When battery 150 is being charged (YES in S106), it is determined whether or not connector signal CNCT is OFF, whether or not pilot signal CPLT is OFF, or whether or not the voltage VAC of external power source 402 detected using voltmeter 172 is smaller than the threshold value (S108).

If connector signal CNCT is OFF (YES in S108), connector 310 of charging cable 300 might be detached from connector 270 of the plug-in hybrid vehicle. If pilot signal CPLT is OFF, charging cable 300 might be detached from the plug-in hybrid vehicle or the external power source 402, or power failure might occur. Likewise, if voltage VAC detected is smaller than the threshold value (YES in S108), charging cable 300 might be detached from the plug-in hybrid vehicle or external power source 402, or power failure might occur. In either case, the charging cannot be continued.

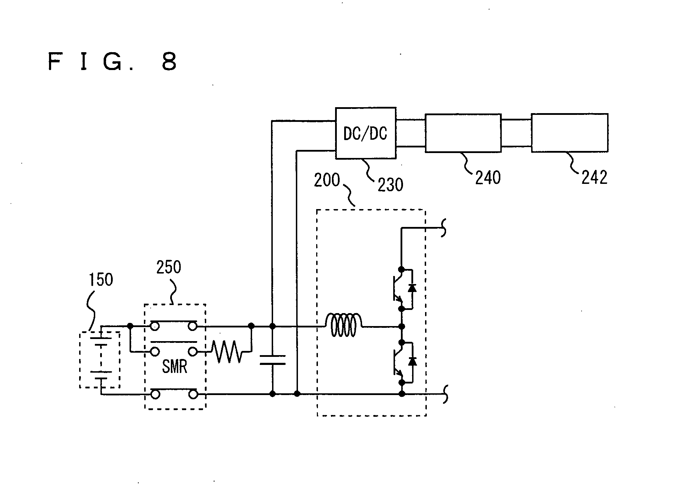

Accordingly, the charging of battery 150 is suspended (S110). When suspending the charging, DFR 260 and relay 332 in CCID 330 are opened. On the other hand, SMR 250 is maintained in the closed state (S104) as shown in Fig. 8.

In this way, while suspending the charging, electric power can be supplied from battery 150 to DC/DC converter 230, auxiliary battery 240, auxiliary device 242, ECU 170, and the like. Hence, while suspending the charging, auxiliary battery 240 can be charged and auxiliary device 242 and ECU 170 can be operated using the electric power discharged from the battery.

If battery 150 is not being charged (NO in S106) after the start of charging (NO in S100), the charging is suspended or ended. When battery 150 is in the fully charged state or if the charging is urgently stopped (YES in S112), it can be assumed that the charging is ended. In this case, SMR 250 is opened immediately (S116).

Meanwhile, when battery 150 is not in the fully charged state and the charging is not urgently stopped (NO in S112), the charging is being suspended. In this case, while the passage of time after suspending the charging is shorter than the standby time (NO in S114), SMR 250 is maintained in the closed state as shown in Fig. 8 (S104).

On the other hand, where the passage of time after suspending the charging is equal to or longer than the standby time (YES in S114), SMR 250 is opened (S116). In this way, a period of time during which electric power can be discharged from battery 150 can be limited. Accordingly, an amount of discharge from battery 150 can be prevented from being too large.

As described above, with the control apparatus according to the present embodiment, if the charging of the battery is suspended, the SMR provided between the battery and the DC/DC converter is maintained in the closed state. In this way, electric power can be maintained to be supplied from the battery to the DC/DC converter, the auxiliary battery, the auxiliary device, and the ECU. Thus, while suspending the charging, the auxiliary battery can be charged and the auxiliary device and the ECU can be operated using the electric power discharged from the battery.

### Second Embodiment

A second embodiment of the present invention will be described below. The present embodiment is different from the foregoing first embodiment in that another set of a battery, which stores electric power to be supplied to the MGs, and an SMR is provided. The present embodiment is also different in that when suspending the charging, only one of the SMRs is maintained in the closed state and the other SMR is opened.

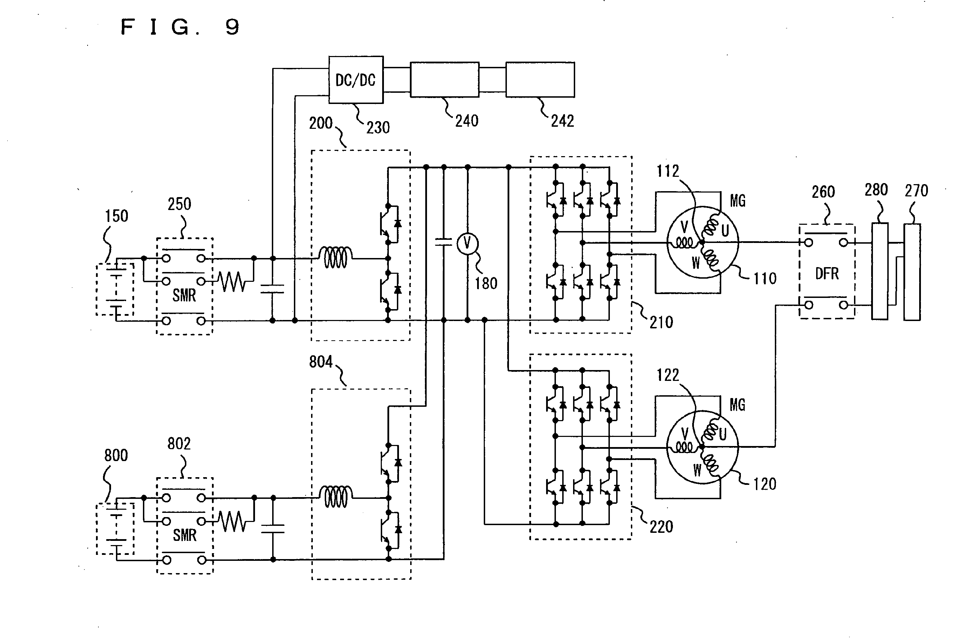

As shown in Fig. 9, in addition to battery 150, SMR 250, and converter 200, the plug-in hybrid vehicle is provided with an add-on battery 800, an add-on SMR 802, and an add-on converter 804.

Add-on battery 800, add-on SMR 802, and add-on converter 804 have the same functions as those of battery 150, SMR 250, and converter 200, respectively. DC/DC converter 230 is only connected between SMR 250 and converter 200. DC/DC converter 230 is not connected between add-on SMR 802 and add-on converter 804.

Add-on battery 800 discharges electric power, which can be supplied to DC/DC converter 230, auxiliary battery 240, auxiliary device 242, and ECU 170 via add-on SMR 802 and add-on converter 804.

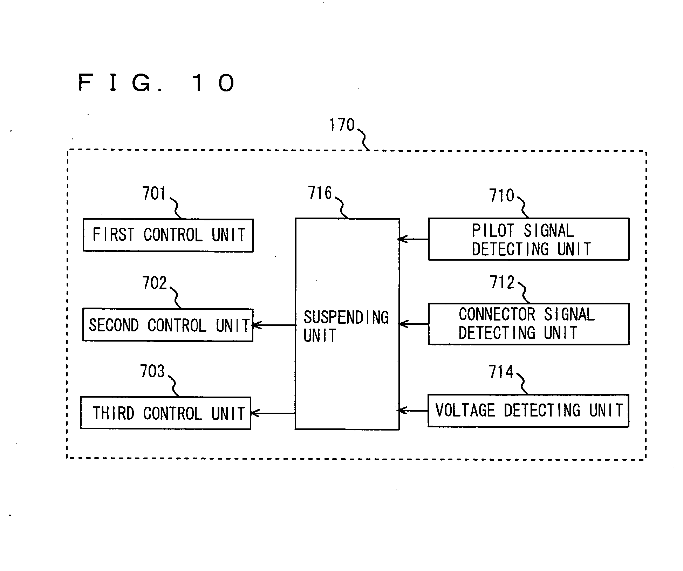

Referring to Fig. 10, the functions of ECU 170 in the present embodiment will be described. It should be noted that the below-described functions may be implemented by software or may be implemented by hardware. The same functions as those in the foregoing first embodiment are given the same reference numerals. Hence, in the description herein, they are not described in detail repeatedly.

ECU 170 further includes a third control unit 703 in addition to first control unit 701, second control unit 702, pilot signal detecting unit 710, connector signal detecting unit 712, voltage detecting unit 714, and suspending unit 716.

If charging of battery 150 is suspended, third control unit 703 controls add-on SMR 802 to open. When add-on SMR 802 is opened, add-on battery 800 is electrically disconnected from DC/DC converter 230, auxiliary battery 240, auxiliary device 242, and ECU 170.

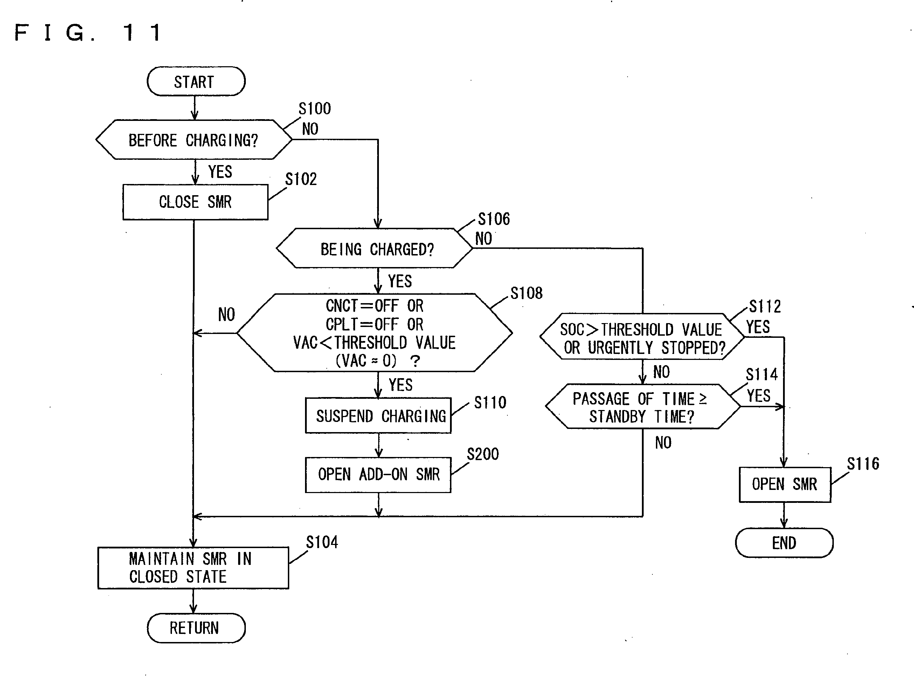

Referring to Fig. 11, a control structure of a program executed by ECU 170 in the present embodiment will be described. The same processes as those in the foregoing first embodiment are given the same step numbers. Hence, in the description herein, they are not described in detail repeatedly.

In S200, ECU 170 opens add-on SMR 802.

The following describes operations of ECU 170 in the present embodiment based on the above-described structure and flowchart.

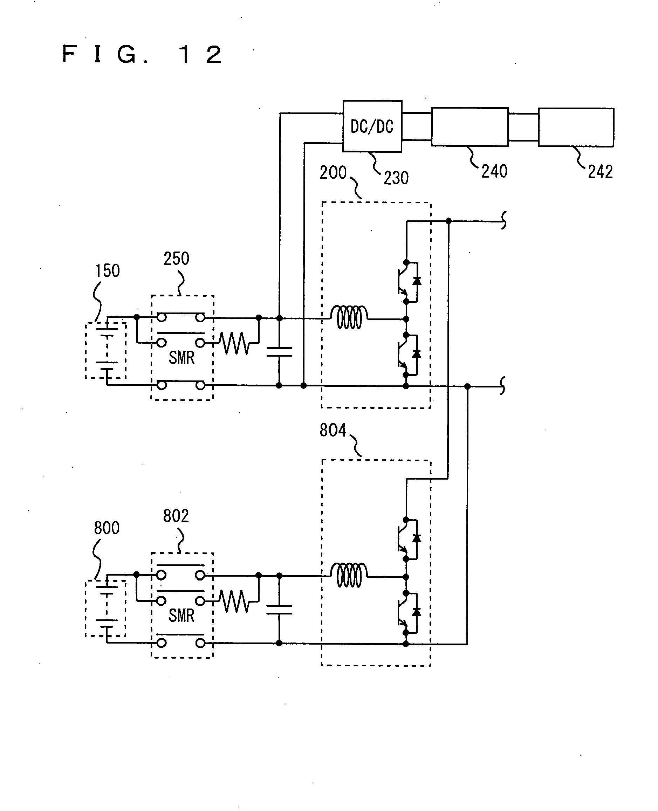

If the charging of battery 150 is suspended (S110), add-on SMR 802 is opened (S200) as shown in Fig. 12. Meanwhile, as with the foregoing first embodiment, SMR 250 is maintained in the closed state (S104).

In this way, while suspending the charging, electric power can be supplied from battery 150 to DC/DC converter 230, auxiliary battery 240, auxiliary device 242, ECU 170, and the like and loss of electric power in add-on battery 800 can be reduced.

### Third Embodiment

A third embodiment of the present invention will be described below. The present embodiment is different from the foregoing first embodiment and second embodiment, in that a charger 290 is provided apart from converter 200, first inverter 210, and second inverter 220.

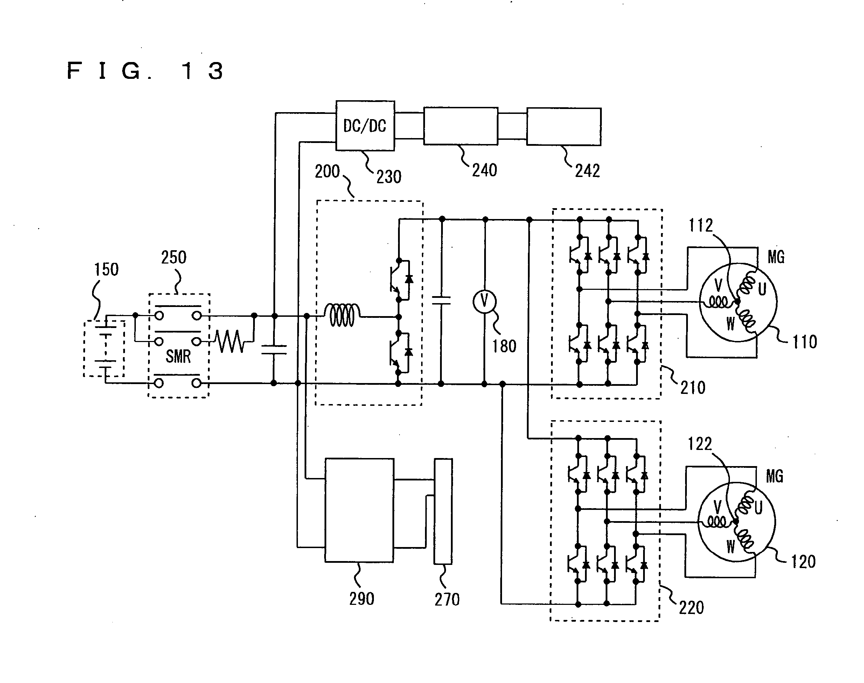

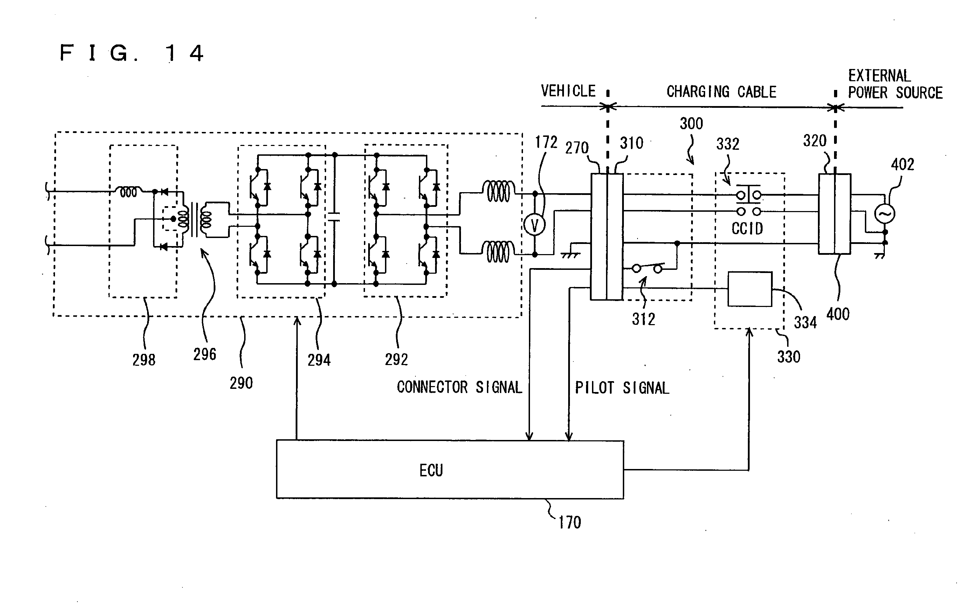

Referring to Fig. 13, in the electrical system of the plug-in hybrid vehicle, charger 290 is further provided to control electric power charged to battery 150. Using charger 290, battery 150 is charged. Charger 290 is connected between battery 150 and converter 200. As shown in Fig. 14, charger 290 includes an AC/DC converting circuit 292, a DC/AC converting circuit 294, an isolation transformer 296, and a rectifying circuit 298.

AC/DC converting circuit 292 is constituted by a single-phase bridge circuit. AC/DC converting circuit 292 converts alternating-current power to direct-current power based on a driving signal from ECU 170. Further, AC/DC converting circuit 292 employs a coil as a reactor to serve as a boost chopper circuit for boosting a voltage.

DC/AC converting circuit 294 is constituted by a single-phase bridge circuit. DC/AC converting circuit 294 converts the direct-current power to high frequency alternating-current power based on a driving signal from ECU 170, and outputs it to isolation transformer 296.

Isolation transformer 296 includes a core formed of a magnetic material, and primary and secondary coils each wound around the core. The primary coil and the secondary coil are electrically insulated from each other, and are respectively connected to DC/AC converting circuit 294 and rectifying circuit 298. Isolation transformer 296 converts the high frequency alternating-current power received from DC/AC converting circuit 294, into one with a voltage level corresponding to a ratio of the numbers of windings of the primary coil and the secondary coil, and then sends it to rectifying circuit 298. Rectifying circuit 298 receives the alternating-current power from isolation transformer 296 and rectifies it into direct-current power.

Although the embodiments of the present invention have been described, it should be considered that the embodiments disclosed herein are illustrative and non-restrictive in any respect. The scope of the present invention is defined by the scope of claims, and is intended to include any modifications within the scope and meaning equivalent to the terms of the claims.

## Claims

1. A control apparatus for a vehicle having a battery (150, 800) charged by electric power supplied from a power source (402) external to said vehicle via an Electric Vehicle Supply Equipment (EVSE) (300) that transfers electric power when said vehicle and said power source (402) are coupled by said EVSE (300), and a device (170, 230, 240, 242) that receives electric power supplied from said battery (150, 800), the control apparatus comprising:
a relay (250, 802) that switches a state in which said battery (150, 800) and said device (170, 230, 240, 242) are connected to each other and a state in which said battery (150, 800) and said device (170, 230, 240, 242) are disconnected from each other; and
a control unit (170), wherein
said control unit (170) controls said relay (250, 802) to connect said battery (150, 800) and said device (170, 230, 240, 242) to each other during charging of said battery (150, 800),
said control unit (170) suspends the charging of said battery (150, 800), and
said control unit (170) controls said relay (250, 802) to maintain said battery (150, 800) and said device (170, 230, 240, 242) to be connected to each other, if the charging of said battery (150, 800) is suspended.

2. The control apparatus for a vehicle according to claim 1, wherein said control unit (170) controls said relay (250, 802) to maintain said battery (150, 800) and said device (170, 230, 240, 242) to be connected to each other until a predetermined time passes after the charging of said battery (150, 800) is suspended.

3. The control apparatus for a vehicle according to claim 1, wherein:
a plurality of said batteries (150, 800) are provided to be connected to each other in parallel,
said relay (250, 802) is provided for each of said batteries (150, 800),
said control unit (170) controls a relay (250) provided for a certain battery (150) of the plurality of said batteries (150, 800), to maintain said certain battery (150) and said device (170, 230, 240, 242) to be connected to each other, and
said control unit (170) controls a relay (802) provided for a remaining battery (800) of the plurality of said batteries (150, 800) to disconnect said remaining battery (800) and said device (170, 230, 240, 242) from each other.

4. The control apparatus for a vehicle according to claim 1, wherein:
said EVSE (300) outputs a pilot signal when connected to said vehicle and said power source (402), and
said control unit (170) suspends the charging of said battery (150, 800) if said pilot signal is stopped during the charging of said battery (150, 800).

5. The control apparatus for a vehicle according to claim 1, wherein:
said control unit (170) detects a connector signal when said EVSE (300) is connected to said vehicle, and
said control unit (170) suspends the charging of said battery (150, 800) if said connector signal is stopped during the charging of said battery (150, 800).

6. The control apparatus for a vehicle according to claim 1, further comprising a sensor (172) that detects a voltage of said power source (402) within said vehicle, wherein
said control unit (170) suspends the charging of said battery (150, 800) if the voltage of said power source (402) becomes smaller than a threshold value during the charging of said battery (150, 800).

7. The control apparatus for a vehicle according to claim 1, wherein said vehicle has a charger (290) mounted thereon to control electric power charged to said battery (150, 800).

8. A control method for a vehicle having a battery (150, 800) charged by electric power supplied from a power source (402) external to said vehicle via an Electric Vehicle Supply Equipment (EVSE) (300) that transfers electric power when said vehicle and said power source (402) are coupled by said EVSE (300), and a device (170, 230, 240, 242) that receives electric power supplied from said battery (150, 800), the control method comprising the steps of:
controlling a relay (250, 802) that switches a state in which said battery (150, 800) and said device (170, 230, 240, 242) are connected to each other and a state in which said battery (150, 800) and said device (170, 230, 240, 242) are disconnected from each other, to connect said battery (150, 800) and said device (170, 230, 240, 242) to each other during charging of said battery (150, 800);
suspending the charging of said battery (150, 800); and
controlling said relay (250, 802) to maintain said battery (150, 800) and said device (170, 230, 240, 242) to be connected to each other, if the charging of said battery (150, 800) is suspended.

9. The control method for a vehicle according to claim 8, wherein the step of controlling said relay (250, 802) to maintain said battery (150, 800) and said device (170, 230, 240, 242) to be connected to each other includes a step of controlling said relay (250, 802) to maintain said battery (150, 800) and said device (170, 230, 240, 242) to be connected to each other until a predetermined time passes after the charging of said battery (150, 800) is suspended.

10. The control method for a vehicle according to claim 8, wherein:
a plurality of said batteries (150, 800) are provided to be connected to each other in parallel,
said relay (250, 802) is provided for each of said batteries (150, 800),
the step of controlling said relay (250, 802) to maintain said battery (150, 800) and said device (170, 230, 240, 242) to be connected to each other includes a step of controlling a relay (250) provided for a certain battery (150) of the plurality of said batteries (150, 800), to maintain said certain battery (150) and said device (170, 230, 240, 242) to be connected to each other, the control method further comprising
a step of controlling a relay (802) provided for a remaining battery (800) of the plurality of said batteries (150, 800) to disconnect said remaining battery (800) and said device (170, 230, 240, 242) from each other.

11. The control method for a vehicle according to claim 8, wherein:
said EVSE (300) outputs a pilot signal when connected to said vehicle and said power source (402), and
the step of suspending the charging of said battery (150, 800) includes a step of suspending the charging of said battery (150, 800) if said pilot signal is stopped during the charging of said battery (150, 800).

12. The control method for a vehicle according to claim 8, further comprising a step of detecting a connector signal when said EVSE (300) is connected to said vehicle, wherein
the step of suspending the charging of said battery (150, 800) includes a step of suspending the charging of said battery (150, 800) if said connector signal is stopped during the charging of said battery (150, 800).

13. The control method for a vehicle according to claim 8, further comprising a step of detecting a voltage of said power source (402) within said vehicle, wherein
the step of suspending the charging of said battery (150, 800) includes a step of suspending the charging of said battery (150, 800) if the voltage of said power source (402) becomes smaller than a threshold value during the charging of said battery (150, 800).

14. The control method for a vehicle according to claim 8, wherein said vehicle has a charger (290) mounted thereon to control electric power charged to said battery (150, 800).

15. A control apparatus for a vehicle having a battery (150, 800) charged by electric power supplied from a power source (402) external to said vehicle via an Electric Vehicle Supply Equipment (EVSE) (300) that transfers electric power when said vehicle and said power source (402) are coupled by said EVSE (300), and a device (170, 230, 240, 242) that receives electric power supplied from said battery (150, 800), the control apparatus comprising:
a relay (250, 802) that switches a state in which said battery (150, 800) and said device (170, 230, 240, 242) are connected to each other and a state in which said battery (150, 800) and said device (170, 230, 240, 242) are disconnected from each other;
means (170) for controlling said relay (250, 802) to connect said battery (150, 800) and said device (170, 230, 240, 242) to each other during charging of said battery (150, 800);
suspending means (170) for suspending the charging of said battery (150, 800); and
control means (170) for controlling said relay (250, 802) to maintain said battery (150, 800) and said device (170, 230, 240, 242) to be connected to each other, if the charging of said battery (150, 800) is suspended.

16. The control apparatus for a vehicle according to claim 15, wherein said control means (170) includes means for controlling said relay (250, 802) to maintain said battery (150, 800) and said device (170, 230, 240, 242) to be connected to each other until a predetermined time passes after the charging of said battery (150, 800) is suspended.

17. The control apparatus for a vehicle according to claim 15, wherein:
a plurality of said batteries (150, 800) are provided to be connected to each other in parallel,
said relay (250, 802) is provided for each of said batteries (150, 800),
said control means (170) includes means for controlling a relay (250) provided for a certain battery (150) of the plurality of said batteries (150, 800), to maintain said certain battery (150) and said device (170, 230, 240, 242) to be connected to each other, the control apparatus further comprising
means (170) for controlling a relay (802) provided for a remaining battery (800) of the plurality of said batteries (150, 800) to disconnect said remaining battery (800) and said device (170, 230, 240, 242) from each other.

18. The control apparatus for a vehicle according to claim 15, wherein:
said EVSE (300) outputs a pilot signal when connected to said vehicle and said power source (402), and
said suspending means (170) includes means for suspending the charging of said battery (150, 800) if said pilot signal is stopped during the charging of said battery (150, 800).

19. The control apparatus for a vehicle according to claim 15, further comprising means (170) for detecting a connector signal when said EVSE (300) is connected to said vehicle, and
said suspending means (170) includes means for suspending the charging of said battery (150, 800) if said connector signal is stopped during the charging of said battery (150,800).

20. The control apparatus for a vehicle according to claim 15, further comprising means (172) for detecting a voltage of said power source (402) within said vehicle, wherein
said suspending means (170) includes means for suspending the charging of said battery (150, 800) if the voltage of said power source (402) becomes smaller than a threshold value during the charging of said battery (150, 800).

21. The control apparatus for a vehicle according to claim 15, wherein said vehicle has a charger (290) mounted thereon to control electric power charged to said battery (150, 800).

22. A control apparatus for a vehicle having a power storage device (150, 800) charged by electric power supplied from a power source (402) external to said vehicle via a coupling instrument (300) that transfers electric power when said vehicle and said power source (402) are coupled by said coupling instrument (300), and a device (170, 230, 240, 242) that receives electric power supplied from said power storage device (150, 800), the control apparatus comprising:
a switching device (250, 802) that switches a state in which said power storage device (150, 800) and said device (170, 230, 240, 242) are connected to each other and a state in which said power storage device (150, 800) and said device (170, 230, 240, 242) are disconnected from each other; and
a control unit (170), wherein
said control unit (170) controls said switching device (250, 802) to connect said power storage device (150, 800) and said device (170, 230, 240, 242) to each other during charging of said power storage device (150, 800),
said control unit (170) suspends the charging of said power storage device (150, 800), and
said control unit (170) controls said switching device (250, 802) to maintain said power storage device (150, 800) and said device (170, 230, 240, 242) to be connected to each other, if the charging of said power storage device (150, 800) is suspended.

23. A control method for a vehicle having a power storage device (150, 800) charged by electric power supplied from a power source (402) external to said vehicle via an coupling instrument (300) that transfers electric power when said vehicle and said power source (402) are coupled by said coupling instrument (300), and a device (170, 230, 240, 242) that receives electric power supplied from said power storage device (150, 800), the control method comprising the steps of:
controlling a switching device (250, 802) that switches a state in which said power storage device (150, 800) and said device (170, 230, 240, 242) are connected to each other and a state in which said power storage device (150, 800) and said device (170, 230, 240, 242) are disconnected from each other, to connect said power storage device (150, 800) and said device (170, 230, 240, 242) to each other during charging of said power storage device (150, 800);
suspending the charging of said power storage device (150, 800); and
controlling said switching device (250, 802) to maintain said power storage device (150, 800) and said device (170, 230, 240, 242) to be connected to each other, if the charging of said power storage device (150, 800) is suspended.

24. A control apparatus for a vehicle having a power storage device (150, 800) charged by electric power supplied from a power source (402) external to said vehicle via a coupling instrument (300) that transfers electric power when said vehicle and said power source (402) are coupled by said coupling instrument (300), and a device (170, 230, 240, 242) that receives electric power supplied from said power storage device (150, 800), the control apparatus comprising:
a switching device (250, 802) that switches a state in which said power storage device (150, 800) and said device (170, 230, 240, 242) are connected to each other and a state in which said power storage device (150, 800) and said device (170, 230, 240, 242) are disconnected from each other;
means (170) for controlling said switching device (250, 802) to connect said power storage device (150, 800) and said device (170, 230, 240, 242) to each other during charging of said power storage device (150, 800);
suspending means (170) for suspending the charging of said power storage device (150, 800); and
control means (170) for controlling said switching device (250, 802) to maintain said power storage device (150, 800) and said device (170, 230, 240, 242) to be connected to each other, if the charging of said power storage device (150, 800) is suspended.
